(19) Europäisches Patentamt
European Patent Office
Office européen des brevets

(11) **EP 4 530 306 A1**

(12) **EUROPEAN PATENT APPLICATION**

(43) Date of publication:
**02.04.2025 Bulletin 2025/14**

(21) Application number: **24202260.6**

(22) Date of filing: **24.09.2024**

(51) International Patent Classification (IPC):
*C08J 3/20* (2006.01)     *C08C 1/15* (2006.01)
*C08J 3/215* (2006.01)     *C08J 3/22* (2006.01)
*C08K 3/04* (2006.01)     *C08L 7/02* (2006.01)
*C08L 21/02* (2006.01)

(52) Cooperative Patent Classification (CPC):
**C08J 3/226; C08C 1/15; C08J 3/203; C08J 3/215;
C08K 3/04; C08L 7/02; C08L 21/02;** C08J 2307/02;
C08J 2321/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 US 202363585401 P
27.06.2024 US 202418756547**

(71) Applicant: **The Goodyear Tire & Rubber Company
Akron, OH 44316 (US)**

(72) Inventor: **DENT, Peter Isaac
Akron, Ohio, 44312 (US)**

(74) Representative: **Kutsch, Bernd
Goodyear S.A.
Patent Department
Avenue Gordon Smith
7750 Colmar-Berg (LU)**

(54) **MASTERBATCH PRODUCTION PROCESS**

(57) A method for producing a masterbatch is disclosed, the method comprising mixing an elastomeric latex, a particulate filler, and a salt in a coagulation chamber. Also, a method for producing an elastomeric composite blend is disclosed, the method comprising: continuously feeding a first composition comprising an elastomeric latex to a coagulation chamber; continuously feeding a second composition comprising a particulate filler and a salt to the coagulation chamber, wherein the first composition and the second composition are mixed in the coagulation chamber to form a masterbatch; and dry mixing the masterbatch with an additional elastomer to form the elastomer composite blend.

FIG. 1

## Description

The rate of coagulation of elastomer particles in an elastomeric latex is important.

It would be desirable to develop new masterbatch production processes with more control over the rate of coagulation of such particles.

### SUMMARY OF THE INVENTION

The invention relates to a method in accordance with claim 1 or 9, respectively, and to a masterbatch in accordance with claim 14.

Dependent claims refer to preferred embodiments of the invention.

Disclosed, in some preferred embodiments, is a method for producing a masterbatch. The method includes continuously feeding a first composition containing an elastomeric latex to a coagulation chamber; and continuously feeding a second composition containing a particulate filler and a salt to the coagulation chamber. The first composition and the second composition are mixed in the coagulation chamber to form the masterbatch. In some embodiments, the particulate filler comprises carbon black. The elastomeric latex may include natural rubber. In some embodiments, the second composition is fed to the coagulation chamber at a pressure of at least 2068 kPa (e.g., 3447 kPa to 34470 kPa). The second composition may be fed to the coagulation chamber at a velocity of at least 30.48 meter per second (e.g., 30.48 meter per second to 244 meter per second). An amount of the salt in the second composition may be fed so that a salt concentration in the coagulation chamber matches that necessary to bring a magnitude of a zeta potential of the latex to be within a range of 30 to 0, a range of 30 to 15, a range of 15 to 1, or a range of 1 to 0.

Disclosed, in other preferred embodiments, is a method for producing an elastomeric composite blend. The method includes continuously feeding a first composition containing an elastomeric latex to a coagulation chamber; and continuously feeding a second composition containing a particulate filler and a salt to the coagulation chamber, wherein the first composition and the second composition are mixed in the coagulation chamber to form the masterbatch; and dry mixing the masterbatch with an additional elastomer to form the elastomer composite blend. In some embodiments, the additional elastomer includes at least one material selected from natural rubber, chlorinated natural rubber, homopolymer, copolymer or terpolymer of 1,3-butadiene, styrene, isoprene, isobutylene, 2,3-dimethyl-1,3-butadiene, acrylonitrile, ethylene, and propylene. The particulate filler may include carbon black. In some embodiments, the elastomeric latex includes natural rubber. The second composition may be fed to the coagulation chamber at a pressure of at least 2068 kPa; and/or at a velocity of at least 30.48 meter per second. In some embodiments, an amount of the salt in the second composition is fed so that a salt concentration in the coagulation chamber matches that necessary to bring a magnitude of a zeta potential of the latex to be within a range of 30 to 0, a range of 30 to 15, a range of 15 to 1, or a range of 1 to 0.

Disclosed, in further embodiments, is a masterbatch produced by a process which includes continuously feeding a first composition containing an elastomeric latex to a coagulation chamber; and continuously feeding a second composition containing a particulate filler and a salt to the coagulation chamber at a velocity of at least 30.48 meter per second. The first composition and the second composition are mixed in the coagulation chamber to form the masterbatch. In some embodiments, an amount of the salt in the second composition is fed so that a salt concentration in the coagulation chamber matches that necessary to bring a magnitude of a zeta potential of the latex to be within a range of 30 to 0 (e.g., 30 to 15, 15 to 1, or 1 to 0).

Disclosed, in other embodiments, is a method for producing a masterbatch which includes mixing an elastomeric latex, a particulate filler, and a salt in a coagulation chamber. The elastomeric latex may be provided in a first composition and the filler and salt may be provided in a second composition. In some embodiments, the latex, filler, and salt are provided in different streams. The latex and salt may be provided in the same stream.

These and other aspects and/or objects of the disclosure are more particularly described below.

### BRIEF DESCRIPTION OF THE DRAWINGS

The following is a brief description of the drawings, which are presented for the purposes of illustrating the exemplary embodiments disclosed herein.

FIG. 1 is a schematic flow chart illustration of a system and method for preparing an elastomer masterbatch in accordance with some embodiments of the present disclosure.

FIG. 2 is a partial, schematic elevation view of an embodiment consistent with the schematic flow chart of FIG. 1.

FIG. 3 is a partial, schematic elevation view of an alternative embodiment consistent with the schematic flow chart of FIG. 1.

FIG. 4 is a partial, cross-sectional elevation view of the mix head/coagulum reactor assembly of the embodiment of FIG. 3.

FIG. 5 is a partial, cross-sectional elevation view corresponding to the view of FIG. 4, illustrating an alternative embodiment.

FIG. 6 is a sectional view taken through line 6-6 of FIG. 5.

FIG. 7 is a section view of a mix head suitable for use in an alternative embodiment.

## DETAILED DESCRIPTION OF PREFERRED EMBODIMEMTS OF THE INVENTION

The present disclosure may be understood more readily by reference to the following detailed description of desired embodiments included therein and the drawings. In the following specification and the claims which follow, reference will be made to a number of terms which shall be defined to have the following meanings.

Unless otherwise defined, all technical and scientific terms used herein have the same meaning as commonly understood by one of ordinary skill in the art. In case of conflict, the present document, including definitions, will control.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/-steps.

All ranges disclosed herein are inclusive of the recited endpoint and independently combinable (for example, the range of "from 2 to 10" is inclusive of the endpoints, 2 and 10, and all the intermediate values).

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

The present disclosure relates to a masterbatch produced by mixing an elastomeric latex (e.g., a natural rubber-containing latex) with a slurry containing filler particles (e.g., carbon black particles) and a salt. The slurry and latex are provided to a coagulation chamber and the slurry may be provided at a much higher velocity than the latex to facilitate high velocity collisions between filler particles and rubber particles. The inclusion of the salt increases the effective ionic concentration during turbulent mixing, which destabilizes the electrostatic repulsive forces of charged latex particles and promotes coagulation. This may be especially advantageous when working with well-stabilized latices, such as a centrifuged and ammoniated natural rubber latex, which may be more difficult to coagulate via mechanical destabilization alone.

The latex may be a water-based latex.

Examples of suitable latices include emulsion-styrene butadiene rubber (ESBR), isoprene rubber, butyl rubber, nitrile butadiene rubber (NBR), chloroprene rubber, and natural rubber. Examples of natural rubbers include Hevea, guayule, TKS (dandelion), milkweed, sunflower, and other naturally-derived latices.

The salt may be a water-soluble salt.

In some embodiments, the term "soluble salt" refers to a salt that is soluble in an amount of at least 20 grams of salt per liter of solvent.

In some embodiments, the salt is selected to preferably raise the pH of the aqueous phase the least (neutral salt) as a typical latex is stabilized at a basic pH.

Carbonates, bicarbonates, and phosphates may be utilized. However, in some embodiments, these materials are not preferred because they raise pH.

In preferred embodiments, the salt reduces the pH. Examples include ammonium cations, calcium cations, and magnesium cations.

In some embodiments, the salt introduces bivalency into the system. For example, the salt may introduce calcium, magnesium, or aluminum cations and sulfate, phosphate, or anions.

In some embodiments, the salt is selected from fluorides, chlorides, bromides, sulfates, and nitrates.

The molar concentration of the salt may be increased until the magnitude of the zeta potential of the latex is between 30-15mV, 15 - 1mV, or 1-0mV.

Zeta potential may be defined at a pH similar to the original latex. For example, for ammoniated natural rubber latex, zeta potential measurements can be taken at a pH of 10, a temperature of 298K, and a water dielectric constant of 80. The electrophoretic mobility of the particles can be measured by, for example, a Malvern Zetasizer Nano ZS and related to the zeta potential via the Henry Equation: $U_E = \frac{2\varepsilon z f(ka)}{3\eta}$ where $U_E$ is the electrophoretic mobility, $z$ is the zeta potential, $\varepsilon$ is the dielectric constant (assume 80 for water), $\eta$ is the viscosity, $f(ka)$ is Henry's function (assumed to be 1.5 via the Smoluchowski approximation due to the polar nature of the water solvent), $k$ is the Debye length, and a is the particle radius.

The amount of salt added may be determined by:

1. identifying the latex type to be coagulated, including its pH;
2. running a zeta potential measurement on the latex at that pH, with 0 salt added;
3. repeating zeta potential measurements for the latex at that pH, but adding some salt with each iteration until the desired salt concentration is identified, for example, a zeta potential in the range of 30-15mV, 15-1 mV, or 0-1 mV; and
4. utilizing the preferred salt concentration to determine how much salt to add to the CB stream, a new stream, or the latex stream so that when everything is brought together in the coagulation chamber, the concentration of the salt will be equal to the concentration identified in step 3.

For an ammoniated NR latex with a pH of 10 with a starting molar concentration of 0.05M (~ -65mV ζ zeta potential) of single valency ions, salt may be added to the CB stream so that the concentration of the mixture in the mixing chamber will be 0.20M (~ - 30mV ζ zeta potential), increasing up to 3M (~ 0mV ζ zeta potential) for maximum coagulation facilitation.

Zeta potential may be measured, for example, using a ZetaPlus instrument by Brookhaven Instruments Corporation or a Malvern Autosizer 4700.

By increasing ionic concentration in the mixing chamber, the coagulation efficiency, defined by the % of latex that is coagulated that was initially charged in the mixing chamber, may improve from an unacceptable level (e.g., <99% coagulation efficiency) to an acceptable level (e.g., greater than or equal to 99% coagulation efficiency).

A turbidity of a product wastewater may be decreased by a significant factor, for example, an order of magnitude, as measured by Nephelometric Turbidity Units (NTU). In some embodiments, the turbidity is reduced from being within a range of 100 to 500 NTU to a range of 5 to 50 NTU.

Additional salt can be added via one or more of the filler-containing streams, the latex-containing stream, and/or in an additional stream.

A person having ordinary skill in the art is capable of optimally destabilizing the latex without introducing pre-coagulation before the mixing nozzle based on the guidance provided herein.

A preferred range may not be how much it pushes the system to coagulate. Instead, the form of the material that is produced may be critical. Higher salt concentrations (lower zeta potential magnitudes) will produce masterbatch coagulum that is smaller. A person having ordinary skill in the art will understand how to balance coagulation rate/efficiency with the dewatering efficiency of their system.

The salt may be selected based on the operating system so as to minimize long term corrosion. For example, in a stainless-steel system, sulfates or phosphates may be preferred over chlorides.

By virtue of the method and apparatus disclosed here, elastomer composite blends can be produced, comprising (i) elastomer masterbatch produced in a continuous flow process involving mixture of elastomer latex and particulate filler fluids at turbulence levels and flow control conditions sufficient to achieve coagulation even without use of traditional coagulating agents, and (ii) additional elastomer added to such elastomer masterbatch in a dry mixing step. Some optional aspects are disclosed in U.S. Pat. No. 6,075,084.

The processes for producing elastomer composite blends advantageously afford flexibility allow for better control distribution of filler between two different elastomer phases in an elastomer composite blend is seen in the example of an elastomer composite blend comprising natural rubber, butadiene rubber (referred in this discussion, in some instances, as "BR") and carbon black filler. For certain applications, it is beneficial to have the carbon black filler primarily in the natural rubber phase of the elastomer composite blend. In accordance with prior known dry/dry mixing techniques, the carbon black can be mixed with the natural rubber using a dry mixing technique, followed by the addition and further dry mixing of BR. A disadvantageously large portion of the carbon black will migrate into the BR phase, due to its affinity for the BR phase and the less than desirable macro-dispersion of the carbon black in the natural rubber phase. In comparison, improved performance properties of comparable elastomer composite blends prepared by the wet/dry mixing method disclosed here indicate that more of the carbon black is retained in the natural rubber phase when the carbon black is mixed with the natural rubber in the initial wet mixing step, followed by the addition of BR in a subsequent dry mixing step.

In accordance with the wet mixing step of the method disclosed here, feed rates of latex fluid and particulate filler fluid to the mixing zone of a coagulum reactor can be precisely metered to achieve high yield rates, with little free latex and little undispersed filler in the product crumb at the discharge end of the coagulum reactor. Without wishing to be bound by theory, it presently is understood that a quasi-mono-phase system is established in the mixing zone except that coagulum solids are being formed there and or downstream thereof in the coagulum zone. Extremely high feed velocity of the particulate filler fluid into the mixing zone of the coagulum reactor and velocity differential relative the latex fluid feed are believed to be significant in achieving sufficient turbulence, i.e., sufficiently energetic shear of the latex by the impact of the particulate filler fluid jet for thorough mixing and dispersion of the particulate into the latex fluid and coagulation. High mixing energies yield product masterbatch crumb with excellent dispersion, together with controlled product delivery. The coagulum is created and then formed into a desirable extrudate. The particulate filler fluid and elastomer latex may be fed continuously, meaning that an ongoing flow of coagulated masterbatch is established from the mixing zone to the discharged end of the coagulum reactor while an uninterrupted flow of the feed fluids is maintained. Typically, the uninterrupted flow of the feed fluids and simultaneous discharge of coagulated masterbatch are maintained for one or more hours, e.g., more than 24 hours, and ever perhaps for a week or more.

While various embodiments can employ a variety of different fillers and elastomers, certain portions of the following detailed description of method and apparatus aspects of the disclosure will, in some instances, for convenience, describe masterbatch comprising natural rubber and carbon black. It will be within the ability of those skilled in the art, given the benefit of this disclosure, to employ the method and apparatus disclosed here in accordance with the principles of operation discussed here to produce masterbatch and elastomer composite blends comprising a number of alternative or additional elastomers, fillers, and other materials. In brief, methods for preparing elastomer masterbatch involve feeding simultaneously (a) a slurry of carbon black or other filler with a salt; and (b) a natural rubber latex fluid or other suitable elastomer fluid to a mixing zone of a coagulum reactor. A coagulum zone extends from the mixing zone, and may be of progressively increasing in cross-sectional area in the downstream direction from an entry end to a discharge end. The slurry may be fed to the mixing zone as a continuous, high velocity jet of injected fluid, while the natural rubber latex fluid is fed at relatively low velocity. The high velocity, flow rate and particulate concentration of the filler slurry are sufficient to cause mixture and high shear of the latex fluid, flow turbulence of the mixture within at least an upstream portion of the coagulum zone, and substantially completely coagulate the elastomer latex prior to the discharge end. Substantially complete coagulation can thus be achieved. The continuous flow method of producing the elastomer composites comprises the continuous and simultaneous feeding of the latex fluid and filler slurry to the mixing zone of the coagulum reactor, establishing a continuous, semi-confined flow of a mixture of the latex and filler slurry in the coagulum zone. Elastomer composite crumb in the form of "worms" or globules are discharged from the discharge end of the coagulum reactor as a substantially constant flow concurrently with the on-going feeding of the latex and carbon black slurry streams into the mixing zone of the coagulum reactor. Notably, the plug-type flow and atmospheric or near atmospheric pressure conditions at the discharge end of the coagulum reactor are highly advantageous in facilitating control and collection of the elastomer composite product, such as for immediate or subsequent further processing steps. Feed rates of the natural rubber latex fluid and carbon black slurry to the mixing zone of the coagulum reactor can be precisely metered to achieve high yield rates, with little free latex and little undispersed carbon black in the product crumb at the discharge end of the coagulum reactor. Without wishing to be bound by theory, it presently is understood that a quasi-mono-phase system is established in the mixing zone except that coagulum solids are being formed there and/or downstream thereof in the coagulum zone. Extremely high feed velocity of the carbon black slurry into the mixing zone of the coagulum reactor and velocity differential relative the natural rubber latex fluid feed are believed to be significant in achieving sufficient turbulence, i.e., sufficiently energetic shear of the latex by the impact of the particulate filler fluid jet for thorough mixing and dispersion of the particulate into the latex fluid and coagulation. High mixing energies yield the novel product with excellent macro-dispersion, together with controlled product delivery. The coagulum is created and then formed into a desirable extrudate.

The masterbatch prepared by the above-described wet mixing technique and apparatus may be formed into an elastomer composite blend by subsequent dry mixing with additional elastomer. Thus, in some embodiments, the present disclosure involves a wet/dry method. The dry mixing step of the wet/dry mixing method can be carried out with commercially available apparatus and techniques including, for example, Banbury mixers and the like. The additional elastomer added during the dry mixing step of the wet/dry mixing method disclosed here can be one or more elastomers which are the same as or different from the elastomer(s) employed to form the masterbatch. Other ingredients also may be added along with the additional elastomer during the dry mix step including, for example, extender oil, additional particulate filler, curatives, etc., in those embodiments wherein additional particulate filler is added during the dry mixing step such additional filler can be the same as or different from the filler(s) used in the masterbatch formed by the wet mixing step.

The aforesaid apparatus and techniques for producing the elastomer composite blends disclosed here are discussed in conjunction with the appended drawings, wherein a continuous flow wet mixing step for producing elastomer masterbatch employs a continuous, semi-confined flow of elastomer latex, for example, natural rubber latex (field latex or concentrate) mixed with a filler slurry with a salt, for example, an aqueous slurry of carbon black with calcium chloride, in a coagulum reactor forming an elongate coagulum zone which extends, with progressively increasing cross-sectional area, from an entry end to a discharge end. The term "semi-confined" flow refers to a highly advantageous feature. As used here the term is intended to mean that the flow path followed by the mixed latex fluid and filler slurry within the coagulum reactor is closed or substantially closed upstream of the mixing zone and is open at the opposite, downstream end of the coagulum reactor (i.e., at the discharge end of the coagulum reactor). Turbulence conditions in the upstream portion of the coagulum zone are maintained in on-going, at least quasi-steady state fashion concurrently with substantially plug flow-type conditions at the open discharge end of the coagulum reactor. The discharge end is "open" at least in the sense that it permits discharge of coagulum, generally at or near atmospheric pressure and, typically, by simple gravity drop (optionally within a shrouded or screened flow path) into suitable collection means, such as the feed hopper of a de-watering extruder. Thus, the semi-confined flow results in a turbulence gradient extending axially or longitudinally within at least a portion of the coagulum reactor. Without wishing to be bound by theory, it presently is understood that the coagulum zone is significant in permitting high turbulence mixing and coagulation in an upstream portion of the coagulum reactor, together with substantially plug-type discharge flow of a solid product at the discharge end. Injection of the carbon black or other filler slurry as a continuous jet into the mixing zone occurs in on-going fashion simultaneously, with ease of collection of the elastomer masterbatch crumb discharged under substantially plug-type flow conditions and generally ambient pressure at the discharge end of the coagulum reactor. Similarly, axial velocities of the slurry through the slurry nozzle into the mixing zone and, typically, at the upstream end of the coagulum zone are substantially higher than at the discharge end. The axial velocity of the slurry will typically be several hundred feet per second (1 foot = 0.3048 meter) as it enters the mixing zone, from a small bore, axially oriented feed tube in accordance with embodiments discussed below. The axial velocity of the resultant flow at the entry end of a coagulum reactor with expanding cross-sectional area in a typical application may be, for example, 1.52 to 6.1 meter per second, and more usually 2.1 to 4.6 meter per second . At the discharge end, in contrast again, axial velocity of the masterbatch crumb product being discharged there will in a typical application be approximately 0.3 to 3 meter per second, and more generally 0.6 to 1.53 meter per second. Thus, the previously mentioned semi-confined turbulent flow achieves the highly significant advantage that natural rubber or other elastomer latex is coagulated by mixture with carbon black or other filler even in the absence of subsequent treatment in a stream or tank of acid, salt or other coagulant solution, with controlled, possibly quasi-molded product delivery from the coagulum reactor for subsequent processing.

It should be understood in this regard that reference to the coagulum reactor as being "open" at the discharge end is not intended to mean that the discharge end is necessarily exposed to view or easily accessed by hand. It may instead be permanently or releasably attached to a collection device or subsequent processing device, such as a diverter (discussed further below), dryer, etc. The discharge end of the coagulum reactor is open in the important sense that the turbulent flow within the coagulum zone of the coagulum reactor, which is under high pressure and sealed against any significant rearward (i.e., upstream) travel at the mixing zone, is permitted to establish the aforesaid pressure and/or velocity gradient as it travels toward and exits from the discharge end.

It should also be recognized in this regard that the turbulence of the flow lessens along the coagulum reactor toward the discharge end. The substantial plug flow of a solid product is achieved prior to the discharge end, dependent upon such factors as percent of capacity utilization, selection of materials and the like. Reference here to the flow being substantially plug flow at or before the discharge end of the coagulum reactor should be understood in light of the fact that the flow at the discharge end is composed primarily or entirely of masterbatch crumb, that is, globules or "worms" of coagulated elastomer masterbatch. The crumb is typically quasi-molded to the inside shape of the coagulum zone at the point along the coagulum zone at which flow became substantially plug flow. The ever-advancing mass of "worms" or globules advantageously have plug-type flow in the sense that they are traveling generally or primarily axially toward the discharge end and at any point in time in a given cross-section of the coagulum zone near the discharge end have a fairly uniform velocity, such that they are readily collected and controlled for further processing. Thus, the fluid phase mixing aspect disclosed here can advantageously be carried out at steady state or quasi-steady state conditions, resulting in high levels of product uniformity.

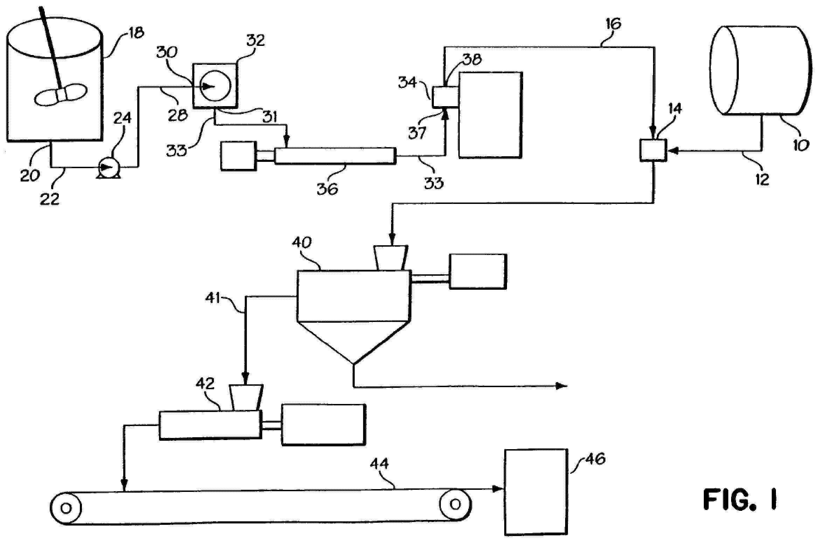

An embodiment of the wet mixing step of the method and apparatus disclosed here is illustrated schematically in FIG. 1. Those skilled in the art will recognize that the various aspects of system configuration, component selection and the like will depend to some extent on the particular characteristics of the intended application. Thus, for example, such factors as maximum system through-put capacity and material selection flexibility will influence the size and layout of the system components. In general, such considerations will be well within the ability of those skilled in the art given the benefit of the present disclosure. The system illustrated in FIG. 1 is seen to include means for feeding natural rubber latex or other elastomer latex fluid at low pressure and low velocity continuously to a mixing zone of a coagulum reactor particularly, a latex pressure tank 10 is shown, to hold the feed supply of latex under pressure. Alternatively, a latex storage tank can be used, equipped with a peristaltic pump or series of pumps or other suitable feed means adapted to hold elastomer latex fluid to be fed via feed line 12 to a mixing zone of a coagulum reactor 14. Latex fluid in tank 10 may be held under air or nitrogen pressure or the like, such that the latex fluid is fed to the mixing zone at a line pressure (e.g., of less than 69 kPa, 13.8 kPa to 55.15 kPa, or 34.5 kPa). The latex feed pressure and the flow lines, connections, etc., of the latex feed means should be arranged to cause shear in the flowing latex fluid as low as reasonably possible. In some embodiments, all flow lines are smooth, with only large radius turns, if any, and smooth or faired line-to-line interconnections. The pressure is selected to yield the desired flow velocity into the mixing zone. A non-limiting example of a useful flow velocity is no more than 3.66 meter per second.

Suitable elastomer latex fluids include both natural and synthetic elastomer latices and latex blends. The latex must, of course, be suitable for coagulation by the selected particulate filler and must be suitable for the intended purpose or application of the final rubber product. It will be within the ability of those skilled in the art to select suitable elastomer latex or a suitable blend of elastomer latices for use in the methods and apparatus disclosed here, given the benefit of this disclosure. Exemplary elastomers include rubbers, polymers (e.g., homopolymers, copolymers and/or terpolymers) of 1,3-butadiene, styrene, isoprene, isobutylene, 2,3-dimethyl-1,3-butadiene, acrylonitrile, ethylene, and propylene and the like. The elastomer may have a glass transition temperature ($T_g$) as measured by differential scanning calorimetry (DSC) ranging from - 120°C. to 0°C. Examples include styrene-butadiene rubber (SBR), natural rubber and its derivatives such as chlorinated rubber, polybutadiene, polyisoprene, poly(styrene-co-butadiene) and the oil extended derivatives of any of them. Blends of any of the foregoing may also be used. The latex may be in an aqueous carrier liquid. Alternatively, the liquid carrier may be a hydrocarbon solvent. In any event, the elastomer latex fluid must be suitable for controlled continuous feed at appropriate velocity, pressure, and concentration into the mixing zone. Examples of suitable synthetic rubbers include: copolymers of from 10 to 70 percent by weight of styrene and from 90 to 30 percent by weight of butadiene such as copolymer of 19 parts styrene and 81 parts butadiene, a copolymer of 30 parts styrene and 70 parts butadiene, a copolymer of 43 parts styrene and 57 parts butadiene and a copolymer of 50 parts styrene and 50 parts butadiene; polymers and copolymers of conjugated dienes such as polybutadiene, polyisoprene, polychloroprene, and copolymers of such conjugated dienes with an ethylenic group-containing monomer copolymerizable therewith such as styrene, methyl styrene, chlorostyrene, acrylonitrile, 2-vinyl-pyridine, 5-methyl-2-vinylpyridine, 5-ethyl-2-vinylpyridine, 2-methyl-5-vinylpyridine, alkyl-substituted acrylates, vinyl ketone, methyl isopropenyl ketone, methyl vinyl either, alphamethylene carboxylic acids and the esters and amides thereof such as acrylic acid and dialkylacrylic acid amide. Also suitable for use herein are copolymers of ethylene and other high alpha olefins such as propylene, butene-1, and pentene-1.

The additional elastomer added during the dry mixing step of the wet/dry mixing method can employ any elastomer or mixture of elastomers suitable to the intended use or application, including those listed above for use in the wet mixing step. In accordance with some embodiments, the elastomer latex employed in the wet mixing step is natural rubber latex and the additional elastomer employed in the dry mixing step is butadiene rubber (BR). In such embodiments, the butadiene rubber may form the minor phase or constituent of the elastomer composite blend, e.g., from 10% to 50% by weight of total elastomer in the elastomer composite blend. In accordance with certain other embodiments, the elastomer latex employed in the wet mixing step is natural rubber latex and the additional elastomer employed in the dry mixing step is styrene-butadiene rubber (SBR). In some embodiments, the SBR may form the major phase or constituent of the elastomer composite blend, e.g., from 50% to 90% by weight of total elastomer in the elastomer composite blend. In accordance with certain other embodiments, the additional elastomer is natural rubber. In accordance with certain other embodiments, the elastomer latex employed in the wet mixing step is butadiene rubber latex and the additional elastomer employed in the dry mixing step is SBR. In such embodiments, the SBR may be from 10% to 90% by weight of total elastomer in the elastomer composite blend. In accordance with certain other embodiments, the elastomer latex employed in the wet mixing step is butadiene rubber latex and the additional elastomer employed in the dry mixing step is natural rubber. In such embodiments, the natural rubber may be the minor constituent or phase of the elastomer composite blend, e.g., from 10% to 50% by weight of total elastomer in the elastomer composite blend. In accordance with certain other embodiments employing butadiene rubber latex in the wet mixing step, the additional elastomer is additional butadiene rubber. In accordance with certain other embodiments, the elastomer latex employed in the wet mixing step is SBR and the additional elastomer is butadiene rubber. In such embodiments, the butadiene rubber may be from 10% to 90% by weight of total elastomer in the elastomer composite blend. In accordance with certain other embodiments, the elastomer latex employed in the wet mixing step is SBR and the additional elastomer is natural rubber. In such embodiments, the natural rubber may be the major constituent or phase, e.g., from 50% to 90% by weight of total elastomer in the elastomer composite blend. In some embodiments, SBR is employed in both the wet mixing and dry mixing steps, thus being essentially 100% of the elastomer in the elastomer composite blend.

As noted further below, the rubber compositions can contain, in addition to the elastomer and filler, curing agents, a coupling agent, and optionally, various processing aids, oil extenders and antidegradants. In that regard, it should be understood that the elastomer composite blends disclosed here include vulcanized compositions (VR), thermoplastic vulcanizates (TPV), thermoplastic elastomers (TPE) and thermoplastic polyolefins (TPO). TPV, TPE, and TPO materials are further classified by their ability to be extruded and molded several times without substantial loss of performance characteristics. Thus, in making the elastomer composite blends one or more curing agents such as, for example, sulfur, sulfur donors, activators, accelerators, peroxides, and other systems used to effect vulcanization of the elastomer composition may be used.

Where the elastomer latex employed in the wet mixing step comprises natural rubber latex, the natural rubber latex can comprise field latex or latex concentrate (produced, for example, by evaporation, centrifugation, or creaming). The natural rubber latex must, of course, be suitable for coagulation by the carbon black. The latex is provided typically in an aqueous carrier liquid. Alternatively, the liquid carrier may be a hydrocarbon solvent. In any event, the natural rubber latex fluid must be suitable for controlled continuous feed at appropriate velocity, pressure, and concentration into the mixing zone. The well-known instability of natural rubber latex is advantageously accommodated, in that it is subjected to relatively low pressure and low shear throughout the system until it is entrained into the previously mentioned semi-confined turbulent flow upon encountering the extraordinarily high velocity and kinetic energy of the carbon black slurry in the mixing zone. In some embodiments, for example, the natural rubber is fed to the mixing zone at a pressure of 34.5 kPa, at a feed velocity in the range of 0.9 to 3.7 meter per second, e.g., 1.2 to 1.83 meter per second. Selection of a suitable latex or blend of latices will be well within the ability of those skilled in the art given the benefit of the present disclosure and the knowledge of selection criteria generally well recognized in the industry.

The particulate filler fluid containing the salt, for example, carbon black slurry with calcium chloride, is fed to the mixing zone at the entry end of coagulum reactor 14 via feed line 16. The slurry may comprise any suitable filler in a suitable carrier fluid. Selection of the carrier fluid will depend largely upon the choice of particulate filler and upon system parameters. Both aqueous and non-aqueous liquids may be used, with water being useful in many embodiments in view of its cost, availability, and suitability of use in the production of carbon black and certain other filler slurries.

When a carbon black filler is used, selection of the carbon black will depend largely upon the intended use of the elastomer composite blend. Optionally, the slurry further includes any material which can be slurried and fed to the mixing zone in accordance with the principles disclosed here. Suitable additional particulate fillers include, for example, conductive fillers, reinforcing fillers, fillers comprising short fibers (typically having an LID aspect ratio less than 40), flakes, etc. Thus, exemplary particulate fillers which can be employed in producing elastomer masterbatch in accordance with the methods and apparatus disclosed here, are carbon black, fumed silica, precipitated silica, coated carbon black, chemically functionalized carbon blacks, such as those having attached organic groups, and silicon-treated carbon black, either alone or in combination with each other. Silicon-treated carbon black, a silicon containing species such as an oxide or carbide of silicon, is distributed through at least a portion of the carbon black aggregate as an intrinsic part of the carbon black. Conventional carbon blacks exist in the form of aggregates, with each aggregate consisting of a single phase, which is carbon. This phase may exist in the form of a graphitic crystallite and/or amorphous carbon and is usually a mixture of the two forms. As discussed elsewhere herein, carbon black aggregates may be modified by depositing silicon-containing species, such as silica, on at least a portion of the surface of the carbon black aggregates. The result may be described as silicon-coated carbon blacks. The materials described herein as silicon-treated carbon blacks are not carbon black aggregates which have been coated or otherwise modified, but actually represent a different kind of aggregate. In the silicon-treated carbon blacks, the aggregates contain two phases. One phase is carbon, which will still be present as graphitic crystallite and/or amorphous carbon, while the second phase is silica (and possibly other silicon-containing species).

Thus, the silicon-containing species phase of the silicon-treated carbon black is an intrinsic part of the aggregate; it is distributed throughout at least a portion of the aggregate. It will be appreciated that the multiphase aggregates are quite different from the silica-coated carbon blacks mentioned above, which consist of preformed, single phase carbon black aggregates having silicon-containing species deposited on their surface. Such carbon blacks may be surface-treated in order to place a silica functionality on the surface of the carbon black aggregate. In this process, an existing aggregate is treated so as to deposit or coat silica (as well as possibly other silicon-containing species) on at least a portion of the surface of the aggregate. For example, an aqueous sodium silicate solution may be used to deposit amorphous silica on the surface of carbon black aggregates in an aqueous slurry at high pH, such as 6 or higher. More specifically, carbon black may be dispersed in water to obtain an aqueous slurry consisting, for example, of 5% by weight carbon black and 95% by weight water. The slurry may be heated to above 70°C, such as to 85-95°C, and the pH adjusted to above 6, such as to a range of 10-11, with an alkali solution. A separate preparation is made of sodium silicate solution, containing the amount of silica which is desired to be deposited on the carbon black, and an acid solution to bring the sodium silicate solution to a neutral ph. The sodium silicate and acid solutions are added dropwise to the slurry, which is maintained at its starting pH value with acid or alkali solution as appropriate. The temperature of the solution is also maintained. A suggested rate for addition of the sodium silicate solution is to calibrate the dropwise addition to add 3 weight percent silicic acid, with respect to the total amount of carbon black, per hour. The slurry could be stirred during the addition, and after its completion for from several minutes (such as 30) to a few hours (i.e., 2-3). In contrast, silicon-treated carbon blacks may be obtained by manufacturing carbon black in the presence of volatizable silicon-containing compounds. Such carbon blacks may be produced in a modular or "staged" furnace carbon black reactor having a combustion zone followed by a zone of converging diameter, a feed stock injection zone with restricted diameter, and a reaction zone. A quench zone is located downstream of the reaction zone. Typically, a quenching fluid, generally water, is sprayed into the stream of newly formed carbon black particles flowing from the reaction zone. In producing silicon-treated carbon black, the aforesaid volatizable silicon-containing compound is introduced into the carbon black reactor at a point upstream of the quench zone. Useful compounds are volatizable compounds at carbon black reactor temperatures. Examples include, but are not limited to, silicates such as tetraethoxy orthosilicate (TEDS) and tetramethoxy orthosilicate, silanes such as tetrachloro silane, and trichloro methylsilane; and silicone polymers such as octamethylcyclotetrasiloxane (OMTS). The flow rate of the volatilizable compound will determine the weight percent of silicon in the treated carbon black. The weight percent of silicon in the treated carbon black typically ranges from 0.1 percent to 25 percent, e.g., 0.5 percent to 10 percent, and 2 percent to 6 percent. The volatizable compound may be pre-mixed with the carbon black-forming feed stock and introduced with the feed stock into the reaction zone. Alternatively, the volatizable compound may be introduced to the reaction zone separately, either upstream or downstream from the feed stock injection point.

As noted above, additives may be used, and in this regard coupling agents useful for coupling silica or carbon black should be expected to be useful with the silicon-treated carbon blacks. Carbon blacks and numerous additional suitable particulate fillers are commercially available and are known to those skilled in the art.

Selection of the particulate filler or mixture of particulate fillers will depend largely upon the intended use of the elastomer composite blends. As used here, particulate filler can include any material which can be slurried and fed to the mixing zone in accordance with the principles disclosed here. Suitable particulate fillers include, for example, conductive fillers, reinforcing fillers, fillers comprising short fibers (typically having an LID aspect ratio less than 40), flakes, etc. In addition to the carbon black and silica-type fillers mentioned above, fillers can be formed of clay, glass, polymer, such as aramid fiber, etc. It will be within the ability of those skilled in the art to select suitable particulate fillers for use in the method and apparatus disclosed here given the benefit of the present disclosure, and it is expected that any filler suitable for use in elastomer compositions may be incorporated into the elastomer composites using the teachings of the present disclosure. Of course, blends of the various particulate fillers discussed herein may also be used.

It will be understood that carbon blacks having lower surface area per unit weight must be used in higher concentration in the particulate slurry to achieve the same coagulation efficacy as lower concentrations of carbon black having higher surface area per unit weight. Agitated mixing tank 18 receives water, salt, and carbon black, e.g., optionally pelletized carbon to black, to prepare an initial mixture fluid. Such mixture fluid passes through discharge port 20 into fluid line 22 equipped with pumping means 24, such as a diaphragm pump or the like. Line 28 passes the mixture fluid to colloid mill 32, or alternatively a pipeline grinder or the like, through intake port 30. The carbon black is dispersed in the aqueous carrier liquid to form a dispersion fluid which is passed through outlet port 31 and fluid line 33 to a homogenizer 34. Pumping means 36 (e.g., a progressing cavity pump or the like) is provided in line 33. Homogenizer 34 more finely disperses the carbon black in the carrier liquid to form the carbon black slurry which is fed to the mixing zone of the coagulum reactor 14. It has an inlet port 37 in fluid communication with line 33 from the colloid mill 32. Typically, the slurry prepared in accordance with the above-described system will have at least 90% agglomerates less than 30 micrometer, e.g., at least 90% agglomerates less than 20 micrometer in size. The carbon black may be broken down to an average size of 5-15 micrometer, e.g., 9 micrometer. Exit port 38 passes the carbon black slurry from the homogenizer to the mixing zone through feed line 16. The slurry may reach 68950 kPa to 103420 kPa in the homogenizer step and exit the homogenizer at 4130 kPa or more. A high carbon black content may be used to reduce the task of removing excess water or other carrier. In some embodiments, 10 to 30 weight percent carbon black is utilized. Those skilled in the art will recognize, given the benefit of this disclosure, that the carbon black content (in weight percent) of the slurry and the slurry flow rate to the mixing zone should be coordinated with the natural rubber latex flow rate to the mixing zone to achieve a desired carbon black content (in phr) in the masterbatch. The carbon black content will be selected in accordance with known principles to achieve material characteristics and performance properties suited to the intended application of the product. Typically, for example, carbon blacks of CTAB value 10 or more are used in sufficient amount to achieve carbon black content in the masterbatch of at least 30 phr.

The slurry may be used in masterbatch production immediately upon being prepared. Fluid conduits carrying the slurry and any optional holding tanks and the like, should establish or maintain conditions which substantially preserve the dispersion of the carbon black in the slurry. That is, substantial reagglomeration or settling out of the particulate filler in the slurry should be prevented or reduced to the extent reasonably practical. In some embodiments, all flow lines are smooth, with smooth line-to-line interconnections. Optionally, an accumulator is used between the homogenizer and the mixing zone to reduce fluctuations in pressure or velocity of the slurry at the slurry nozzle tip in the mixing zone.

Natural rubber latex fluid or other elastomer latex fluid passed to the mixing zone via feed line 12 and carbon black slurry fed to the mixing zone via feed line 16 under proper process parameters as discussed above, can produce a novel elastomer composite, specifically, elastomer masterbatch crumb. Means may also be provided for incorporating various additives into the elastomer masterbatch. An additive fluid comprising one or more additives may be fed to the mixing zone as a separate feed stream. One or more additives also may be pre-mixed, if suitable, with the carbon black slurry or, more typically, with the elastomer latex fluid. Additives also can be mixed into the masterbatch subsequently, i.e., during the dry mixing step. Numerous additives are well known to those skilled in the art and include, for example, antioxidants, antiozonants, plasticizers, processing aids (e.g., liquid polymers, oils, and the like), resins, flame-retardants, extender oils, lubricants, and a mixture of any of them. The general use and selection of such additives is well known to those skilled in the art. Their use in the system disclosed here will be readily understood with the benefit of the present disclosure. In accordance with certain alternative embodiments, curative also can be incorporated in a similar manner, to produce a curable elastomer composite which may be referred to as a curable base compound.

The elastomer masterbatch crumb is passed from the discharge end of coagulum reactor 14 to suitable drying apparatus. In the embodiment of FIG. 1 the masterbatch crumb undergoes multi-stage drying. It is passed first to a de-watering extruder 40 and then via conveyor or simple gravity drop or other suitable means 41 to a drying extruder 42. In some embodiments consistent with that illustrated in FIG. 1 producing natural rubber masterbatch with carbon black filler, the de-watering/drying operation will typically reduce water content to 0 to 1 weight percent, e.g., 0.0 to 0.5 weight percent. Suitable dryers are well known and commercially available, including for example, extruder dryers, fluid bed dryers, hot air or other oven dryers, and the like.

Dried masterbatch crumb from drying extruder 42 is carried by a cooling conveyor 44 to a baler 46. The baler is an optional, advantageous feature of the apparatus of FIG. 1, wherein the dried masterbatch crumb is compressed within a chamber in to form-stable compressed blocks or the like. Typically, 11.3 kg to 34 kg quantities of the elastomer masterbatch are compressed into blocks or bales for transport, further processing, etc. Alternatively, the product is provided as pellets, for example, by chopping the crumb.

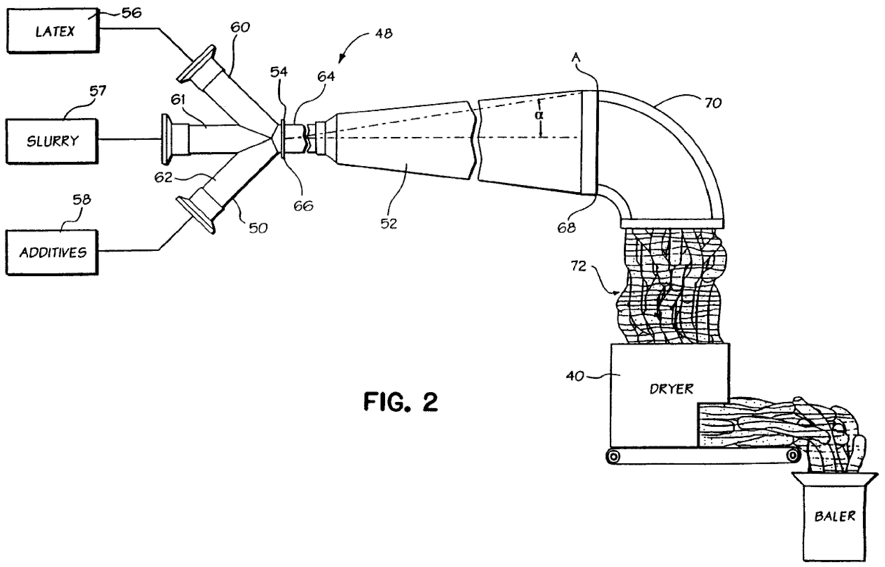

The dimensions and particular design features of the coagulum reactor 14, including the mixing zone/coagulum zone assembly, suitable for an embodiment in accordance with FIG. 1, will depend in part on such design factors as the desired throughput capacity, the selection of materials to be processed, etc. One embodiment is illustrated in FIG. 2 wherein a coagulum reactor 48 has a mix head 50 attached to a coagulum zone 52 with a fluid-tight seal at joint 54. FIG. 2 schematically illustrates a first subsystem 56 for feeding elastomer latex to the mixing zone, subsystem 57 for feeding carbon black slurry or other particulate filler fluid to the mixing zone, and subsystem 58 for feeding an optional additive fluid, pressurized air, etc. to the mixing zone. The mix head 50 is seen to have three feed channels 60, 61, 62. Feed channel 60 is provided for the natural rubber latex fluid and feed channel 62 is provided for direct feed of gas and/or additive fluid. In connection with embodiments employing direct injection of additives, a significant advantage is achieved in connection with hydrocarbon additives or, more generally, non-water miscible additives. While it is well known to employ emulsion intermediates to create additive emulsions suitable for pre-blending with an elastomer latex, embodiments in accordance with the present disclosure employing direct injection of additives may eliminate not only the need for emulsion intermediates, but also the equipment such as tanks, dispersing equipment, etc. previously used in forming the emulsions. Reductions in manufacturing cost and complexity can, therefore, be achieved. As discussed further below, the feed channel 61 through which slurry is fed to the mixing zone may be coaxial with the mixing zone and the coagulum zone of the coagulum reactor. While only a single feed channel is shown to receive the elastomer latex fluid, any suitable number of feed channels may be arranged around the central feed channel through which the slurry is fed to the mixing zone. Thus, for example, in the embodiment of FIG. 2 a fourth feed channel could be provided through which ambient air or high-pressure air, or other gas is fed to the mixing zone. Pressurized air may be injected likewise with the slurry through the central axial feed channel 61. Auxiliary feed channels can be temporarily or permanently sealed when not in use.

The coagulum zone 52 of the coagulum reactor 48 is seen to have a first portion 64 having an axial length which may be selected depending upon design objectives for the particular application intended. Optionally, the coagulum zone may have a constant cross-sectional area over all or substantially all of its axial length. Thus, for example, the coagulum reactor may define a simple, straight tubular flow channel from the mixing zone to the discharge end. The cross-sectional area of the coagulum zone 52 increases progressively from the entry end 66 to discharge end 68. More specifically, the cross-sectional area may increase in the longitudinal direction from the entry end to the discharge end. In the embodiment of FIG. 2, the coagulum zone increases in cross-sectional area progressively in the sense that it increases continuously following constant cross-sectional portion 64. References to the diameter and cross-sectional area of the coagulum reactor (or, more properly, the coagulum zone defined within the coagulum reactor) and other components, unless stated otherwise, are intended to mean the cross-sectional area of the open flow passageway and the inside diameter of such flow passageway.

Elastomer composite, specifically, coagulated elastomer latex in the form of masterbatch crumb 72, is seen being discharged from the coagulum reactor 48 through a diverter 70. Diverter 70 is an adjustable conduit attached to the coagulum reactor at discharge end 68. It is adjustable so as to selectively pass the elastomer masterbatch crumb 72 to any of various different receiving sites. This feature advantageously facilitates removal of masterbatch crumb from the product stream, for example, for testing or at the beginning of a production run when initial process instability may result temporarily in inferior product. In addition, the diverter provides design flexibility to direct product from the coagulum reactor to different post-processing paths. In accordance with the embodiment of FIG. 1, the masterbatch crumb 72 being discharged from coagulum reactor 48 through diverter 70 is seen to be received by a drier 40.

The cross-sectional dimension of coagulum reactor 48 is seen to increase at an overall angle a between entry end 66 and discharge end 68. Angle ($\alpha$ is greater than 0° and may be less than 45°, less than 15°, or from 0.5° to 5°). The angle $\alpha$ is seen to be a half angle, in that it is measured from the central longitudinal axis of the coagulum zone to a point A at the outer circumference of the coagulum zone at the end of the coagulum reactor. In this regard, it should be understood that the cross-sectional area of the upstream portion of the coagulum reactor, that is, the portion near the entry end 66, may increase sufficiently slowly to achieve quasi-molding of the coagulum in accordance with the principles discussed above. Too large an angle of expansion of the coagulum zone may result in the elastomer masterbatch not being produced in desirable crumb form of globules or worms and simply spraying through the coagulum reactor. Increasing the bore of the coagulum reactor too slowly can result, in certain embodiments, in backup or clogging of the feeds and reaction product into the mix head. In a downstream portion of the coagulum zone, wherein the latex has been substantially coagulated and flow has become essentially plug flow, the coagulum zone may extend either with or without increase in cross-sectional area. Thus, reference here to the coagulum zone having a progressively increasing cross-sectional area should be understood to refer primarily to that portion of the coagulum zone wherein flow is not substantially plug flow.

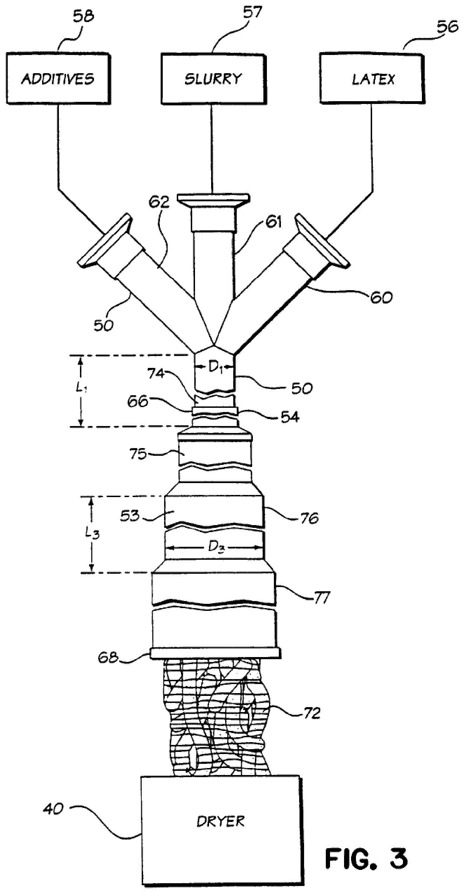

The cross-sectional area of the coagulum zone (that is, at least the upstream portion thereof, as discussed immediately above) may increase in step-wise fashion, rather than in the continuous fashion illustrated in the embodiment of FIG. 2. In the embodiment illustrated in FIG. 3, a continuous flow system for production of elastomer masterbatch in accordance with the method and apparatus disclosed here, is seen to include a mix head/coagulum zone assembly wherein the cross-sectional area of the coagulum zone increases in step-wise fashion. The individual sections of the coagulum zone in such a step-wise embodiment have a faired connection to adjacent sections. That is, they combine to form a smooth and generally continuous coagulum zone surface, as opposed, for example, to a sharp or instantaneous increase in diameter from one section to the next. The coagulum zone of FIG. 3 increases in three steps, such that there are four different sections or sub-zones 74-77. Consistent with the design principles discussed immediately above, the cross-sectional area of coagulum zone 53 increases from the entry end 66 to point A at the discharge end 68 at an overall angle which achieves the necessary flow control in the upstream portion of the coagulum reactor. The first section 74 can be taken as including (a) the constant diameter portion of the mix head 50 immediately downstream of the mixing zone, and (b) the same or similar diameter portion connected thereto at joint 54 at the entry end 66. This first section has a constant cross-sectional diameter $D_1$ and an axial dimension or length $L_1$. In this first section 74 the length $L_1$ may be greater than three times the diameter $D_1$, e.g., greater than five times $D_1$, or 12 to 18 times $D_1$. Typically, this section will have a length of fifteen times $D_1$. Each subsequent section may have a constant cross-sectional dimension and cross-sectional area approximately double that of the preceding (i.e., upstream) section. Thus, for example, section 75 has a constant cross-sectional dimension and a cross-sectional area which is twice that of section 74. Similarly, the cross-sectional area of section 76 is double that of section 75, and the cross-sectional area of section 77 is double that of section 76. In each of sections 75-77, the length may be greater than three times its diameter, e.g., three to seven times its diameter and generally five times its diameter. Thus, for example, in section 76 longitudinal dimension $L_3$ may be five times its diameter $D_3$.

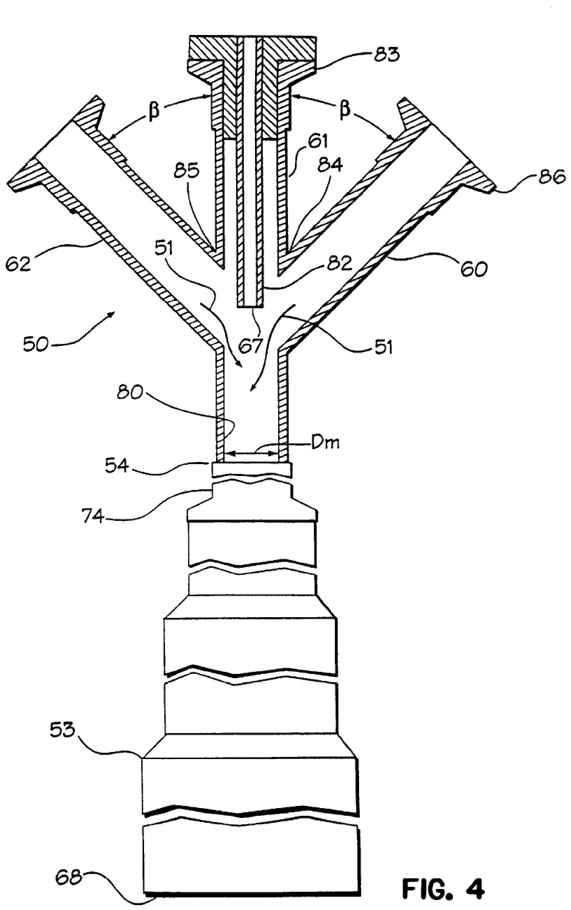

A mix head and coagulum zone assembly corresponding to the embodiment of FIG. 3 is shown in FIG. 4 partially in section view. Mix head 50 is integral with coagulum zone extender 53 via joint 54. It defines a mixing zone wherein multiple feed channels 60, 61, 62 form a junction, with an elongate, substantially cylindrical channel 80 substantially coaxial with the coagulum zone portion within extender 53. It will be recognized that it is not essential to the operability of the method and apparatus disclosed here, to precisely define the boundaries of the mixing zone and/or coagulum zone. Numerous variations are possible in the design of the flow channel junction area, as will be apparent to those skilled in the art given the benefit of the present disclosure. In that regard, in embodiments of the type illustrated in FIG. 4, for example, the slurry tip 67 generally is upstream of the beginning of cylindrical portion 80, being approximately centered longitudinally in the junction of the feed channels. In such embodiments, the minimum cross-sectional area defined by the imaginary cone from the slurry tip 67 to the circumferential perimeter at the beginning of the cylindrical portion 80 may be advantageously greater than, or at least equal to, the cross-sectional area of the latex feed channel 60. In some embodiments, both channel 80 and at least the upstream portion of the coagulum zone wherein flow turbulence exists prior to substantially complete coagulation of the elastomer latex, have a circular cross-section.

The means for feeding carbon black slurry or other particulate filler fluid is seen to comprise a feed tube 82 extending substantially coaxially with the mixing chamber to an opening or slurry nozzle tip 67 which is open toward the coagulum zone. The carbon black slurry, as noted above, is fed to the mixing zone at very high velocity relative to the feed velocity of the latex, and the axial arrangement of narrow bore feed tube 82 results in excellent development of flow turbulence. The diameter $D_m$ of the channel 80 (which, as noted above, may be substantially equal to the diameter $D_1$ of immediately following portion of section 74 of the coagulum zone) may be at least twice the inside diameter of slurry feed tube 82 (e.g., four to eight times the diameter of feed tube 82 or seven to eight times that diameter). Feed tube 82 is seen to form a fluid-tight seal with the entry port 83 at the upstream end of feed channel 61 of mix head 50. The diameter of the axial feed tube 82 is determined largely by the required volumetric flow rate and axial velocity of the slurry as it passes through the slurry nozzle tip 67 into the mixing chamber. The correct or required volume and velocity can be readily determined by those skilled in the art given the benefit of this disclosure, and will be a function, in part, of the concentration and choice of materials. Embodiments such as that illustrated and disclosed here, wherein the feed tube for the carbon black slurry is removable, provide desirable flexibility in manufacturing different masterbatch compositions at different times. The feed tube used in one production run can be removed and replaced by a larger or smaller bore tube appropriate to a subsequent production. In view of the pressure and velocity at which the slurry exits the feed tube, it may be referred to as a spray or jet into the mixing zone. This should be understood to mean in at least certain embodiments, high speed injection of the slurry into an area already substantially filled with fluid. Thus, it is a spray in the sense of its immediate distribution as it passes through the slurry nozzle tip , and not necessarily in the sense of free-flying material droplets in a simple spreading trajectory.

The additional feed channels 60 and 62 are seen to form a junction 84, 85, respectively, with feed channel 60 and downstream channel 80 at an angle β. The angle β may in many embodiments have a value from greater than 0° to less than 180°. Typically, β may be, for example, from 30°-90°. It is desirable to avoid a negative pressure, that is, cavitation of the latex fluid as it is entrained by the high velocity slurry exiting at slurry nozzle tip 67, since this may disadvantageously cause inconsistent mixing leading to inconsistent masterbatch product. Air or other gas can be injected or otherwise fed to the mixing zone to assist in breaking any such vacuum. In addition, an expanded feed line for the natural rubber latex leading to the entry port 86 of feed channel 60 is desirable to act as a latex fluid reservoir. In the embodiment of FIG. 4, latex feed channel 60 intersects the mixing zone adjacent slurry nozzle tip 67. Alternatively, however, the latex feed channel can intersect the mixing channel upstream or downstream of the slurry nozzle tip 67.

The carbon black slurry or other particulate filler fluid typically is supplied to feed tube 82 at a pressure above 2068 kPa, such as 3447 kPa to 34470 kPa, e.g., 6895 kPa. In some embodiments, the liquid slurry is fed into the mixing zone through the slurry nozzle tip 67 at a velocity above 30.48 meter per second, e.g., 30.48 meter per second to 244 meter per second, or 61 meter per second to 152 meter per second, for example, 107 meter per second. Arrows 51 in FIG. 4 represent the general direction of flow of the elastomer latex and auxiliary feed materials through feed channels 60 and 62 into the channel 80 below slurry nozzle tip 67. Thus, the slurry and latex fluids are fed to the mixing zones at greatly different feed stream velocities, in accordance with the numbers set forth above. While not wishing to be bound by theory, it presently is understood that the differential feed achieves latex shear conditions in the mixing zone leading to good macro-dispersion and coagulation.

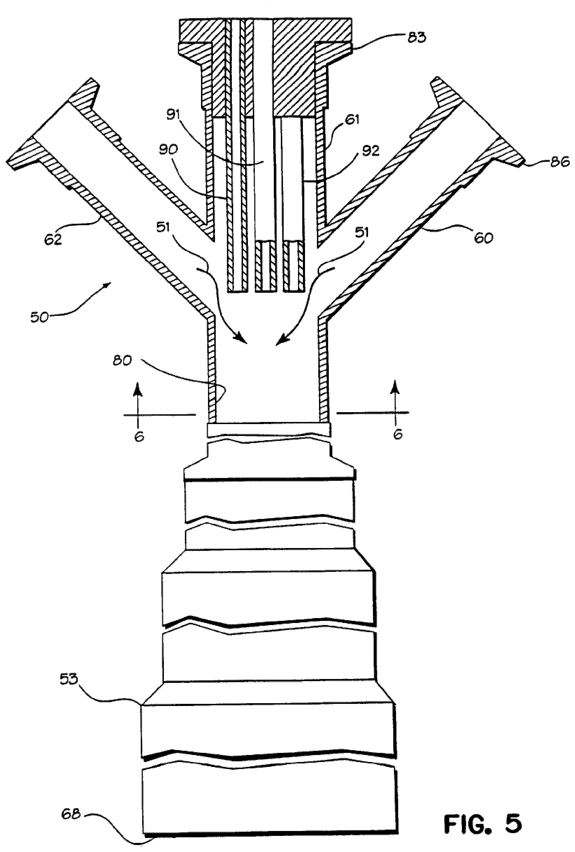

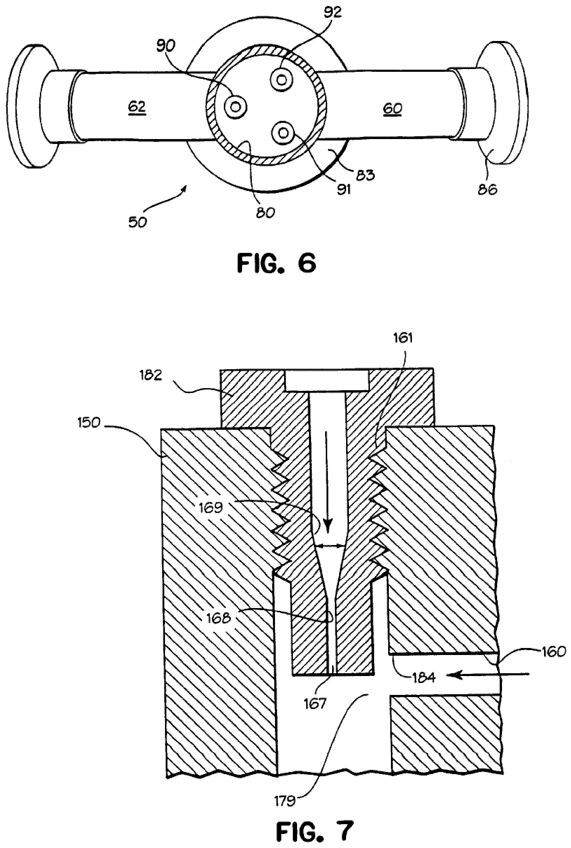

An alternative embodiment is illustrated in FIGS. 5 and 6 wherein the single axial feed tube 82 in the embodiment of FIG. 4 is rep laced by multiple axially extending feed tubes 90-92. Even greater numbers of feed tubes may be employed, for example, up to 6 or 8 axially-extending feed tubes. Advantageously, production flexibility is achieved by using different feed tubes of different diameters for production of different formulations.

Also, multiple feed tubes can be used simultaneously to achieve good flow turbulence within the mixing zone and coagulum zone of the coagulum reactor.

An alternative embodiment of the mix head is illustrated in FIG. 7. Mix head 150 is seen to define a mixing zone 179. An axial feed channel 161 receives a feed tube 182 adapted to feed carbon black slurry or other particulate filler fluid containing a salt at high velocity into the mixing chamber 179. It can be seen that the central bore in feed tube 182 terminates at slurry nozzle tip 167. A constant diameter nozzle land 168 is immediately upstream of slurry nozzle tip 167, leading to a larger bore area 169. The axial dimension of land 168 may be 2 to 6, e.g., 5, times its diameter. A second feed channel 160 forms a junction 184 with the mixing zone 179 at a 90° angle for feeding elastomer latex fluid to the mixing zone. The cross-sectional diameter of the latex fluid feed channel 160 is substantially larger than the cross-sectional diameter of the slurry nozzle tip 167 and land 168. Without wishing to be bound by theory, the axial elongation of nozzle land 168, coupled with the expanded diameter bore section upstream of the nozzle land, is believed to provide advantageous stability in the flow of slurry through feed tube 182 into the mixing zone 179. The bore of feed tube 182 is found to function well with a 20° chamfer, that is, conical area 169 which expands in the upstream direction at a 20° angle. Downstream of mixing zone 179 is an elongated coagulum zone. Consistent with the principles discussed above, such coagulum zone need be only marginally elongated. That is, its axial dimension need be only marginally longer than its diameter. A progressively enlarged coagulum zone may be used.

As discussed above, coagulation of the elastomer masterbatch is substantially complete at or before the end of the coagulum reactor. That is, coagulation occurs without the necessity of adding a stream of coagulant solution or the like. Coagulation may occur in the mixing zone. The mixing zone may be considered all or portion of the coagulum zone for this purpose. Also, reference to substantially complete coagulation prior to the elastomer masterbatch exiting the coagulum reactor is not meant to exclude the possibility of subsequent processing and follow-on treatment steps, for any of various purposes appropriate to the intended use of the final product. In that regard, substantially complete coagulation in some embodiments of the novel method disclosed here employing natural rubber latex means that at least 95 weight percent of the rubber hydrocarbon of the latex is coagulated, e.g., at least 97 weight percent, and at least 99 weight percent is coagulated.

The masterbatch (or other elastomer composite) produced by the wet mixing step optionally undergoes any suitable further processing prior to addition of additional elastomer in the dry mixing step of the wet/dry method disclosed here. Suitable apparatus for the dry mixing step is commercially available and will be apparent to those skilled in the art given the benefit of this disclosure. Suitable dry mixing apparatus include, for example, Banbury mixers, mills, roller mixers, etc. The coagulum from the wet mixing step, with or without any further intermediate processing, is introduced into the Banbury mixer or other mixing device along with the additional elastomer in any suitable order and relative proportion suitable to the intended use or application. It will be within the ability of those skilled in the art, given the benefit of this disclosure to determine suitable order of addition and relative proportion for the wet mixing product and the additional elastomer. Likewise, it will be within the ability of those skilled in the art given the benefit of this disclosure to select suitable additional ingredients for addition during the dry mixing step suitable to the intended use or application, for example, extender oil, curatives, and other additives known for use in elastomer composites and elastomer composite blends of the general type disclosed here.

The method and apparatus disclosed and described here produce elastomer composite blends having excellent physical properties and performance characteristics. Novel elastomer composite blends include masterbatch compositions produced by the above-disclosed method and apparatus, as well as intermediate compounds and finished products made from such masterbatch compositions. Notably, elastomer masterbatch can be produced using natural rubber latex (latex concentrate or field latex), along with various grades of carbon black filler, having excellent physical properties and performance characteristics. Carbon blacks presently in broad commercial use for such application as tire tread have been used successfully, as well as carbon blacks heretofore considered unsuitable for commercial use in known production apparatus and methods. Those unsuitable because their high surface area and low structure rendered them impractical to achieve acceptable levels of macro-dispersion at routine commercial loading levels for the carbon black and/or to preserve the molecular weight of the elastomer are useful for certain applications of the novel elastomer composite blends disclosed here. Such elastomer composite blends are found to have excellent dispersion of the carbon black in the elastomer. Moreover, these advantageous results were achieved without the need for a coagulation step involving a treatment tank or stream of acid solution or other coagulant. Thus, not only can the cost and complexity of such coagulant treatments be avoided, so too the need to handle effluent streams from such operations also is avoidable also is avoided.

Prior known dry mastication techniques could not achieve equal dispersion of fillers in elastomer composite blends without significant molecular weight degradation and, therefore, could not produce the novel natural rubber compositions made in accordance with some embodiments. In that regard, novel elastomer composite blends are disclosed here having excellent macro-dispersion of carbon black in natural rubber, even of carbon blacks having a structure to surface area ratio DBPA:CTAB less than 1.2 and even less than 1.0, with high molecular weight of the natural rubber. Known mixing techniques in the past did not achieve such excellent macro-dispersion of carbon black without significant molecular weight degradation of the natural rubber and, therefore, did not produce the novel masterbatch compositions and other elastomer composites. Elastomer composite blends in accordance with this disclosure, may have carbon black macro-distribution levels not heretofore achieved, can be used in place of prior known elastomer materials having poorer macro-dispersion. Thus, elastomer composite blends disclosed here can be used as cured compounds in accordance with known techniques. Such novel cured compounds may have physical characteristics and performance properties generally comparable to, and in some instances significantly better than, those of otherwise comparable cured compounds comprising masterbatch of poorer macro-dispersion. Elastomer composite blends can be produced in accordance with the present disclosure, with reduced mixing time, reduced energy input, and/or other cost savings.

As used here, the carbon black structure can be measured as the dibutyl phthalate adsorption (DBPA) value, expressed as cubic centimeters of DBPA per 100 grams carbon black, according to the procedure set forth in ASTM D2414. The carbon black surface area can be measured as CTAB expressed as square meters per gram of carbon black, according to the procedure set forth in ASTM D3765-85. It will be recognized that other factors affecting the level of dispersion achievable using the method and apparatus disclosed here, include the concentration of the carbon black in the slurry, total energy input into the slurry and energy input during mixing of the fluid streams.

The macro-dispersion quality of carbon black in natural rubber masterbatch disclosed here is significantly better than that in previously known masterbatch of approximately equal $MW_{sol}$ (weight average). In some embodiments excellent carbon black distribution is achieved with $MW_{sol}$ approximately equal to that of natural rubber in the field latex state, (e.g., approximately 1,000,000) a condition not previously achieved. The dispersion quality advantage is especially significant using carbon black with low structure and high surface area, e.g., DBPA less than 100 cc/100 g, CTAB greater than 45 to 65 $m^2$/g, and DBPA:CTAB less than 1.2 (e.g., less than 1.0).

**Claims**

1. A method for producing a masterbatch, the method comprising mixing an elastomeric latex, a particulate filler, and a salt in a coagulation chamber.

2. The method of claim 1, wherein the particulate filler comprises carbon black and/or wherein the elastomeric latex comprises natural rubber.

3. The method of claim 1 or 2, further comprising:

   continuously feeding a first composition comprising the elastomeric latex to a coagulation chamber; and
   continuously feeding a second composition comprising the particulate filler and the salt to the coagulation chamber.

4. The method of claim 3, wherein the second composition is fed to the coagulation chamber at a pressure of at least 2068 kPa; and/or wherein the second composition is fed to the coagulation chamber at a velocity of at least 30.48 meter per second.

5. The method of at least one of the previous claims, wherein the elastomeric latex, the filler, and the salt are provided to the coagulation reactor in separate streams.

6. The method of at least one of the previous claims 1 to 4, wherein the elastomeric latex and the salt are provided to the coagulation reactor in the same stream.

7. The method of at least one of the previous claims, wherein an amount of the salt is provided so that a salt concentration in the coagulation chamber matches that necessary to bring a magnitude of a zeta potential of the latex to be within a range of 30 to 15.

8. The method of at least one of the previous claims 1 to 6, wherein

   (i) an amount of the salt is provided so that a salt concentration in the coagulation chamber matches that necessary to bring a magnitude of a zeta potential of the latex to be within a range of 15 to 1; or
   (ii) an amount of the salt is provided so that a salt concentration in the coagulation chamber matches that necessary to bring a magnitude of a zeta potential of the latex to be within a range of 1 to 0.

9. A method for producing an elastomeric composite blend, the method comprising:

continuously feeding a first composition comprising an elastomeric latex to a coagulation chamber;
continuously feeding a second composition comprising a particulate filler and a salt to the coagulation chamber, wherein the first composition and the second composition are mixed in the coagulation chamber to form a masterbatch; and
dry mixing the masterbatch with an additional elastomer to form the elastomer composite blend.

10. The method of claim 9, wherein the additional elastomer comprises at least one material selected from the group consisting of natural rubber, chlorinated natural rubber, homopolymer, copolymer or terpolymer of 1,3-butadiene, styrene, isoprene, isobutylene, 2,3-dimethyl-1,3-butadiene, acrylonitrile, ethylene, and propylene.

11. The method of claim 9 or 10, wherein the particulate filler comprises carbon black and/or wherein the elastomeric latex comprises natural rubber.

12. The method of at least one of the claims 9 to 11, wherein the second composition is fed to the coagulation chamber at a pressure of at least 2068 kPa; and/or wherein the second composition is fed to the coagulation chamber at a velocity of at least 30.48 meter per second.

13. The method of at least one of the claims 9 to 12, wherein

   (i) an amount of the salt in the second composition is fed so that a salt concentration in the coagulation chamber matches that necessary to bring a magnitude of a zeta potential of the latex to be within a range of 30 to 15; or
   (ii) an amount of the salt in the second composition is fed so that a salt concentration in the coagulation chamber matches that necessary to bring a magnitude of a zeta potential of the latex to be within a range of 15 to 1.
   (iii) an amount of the salt in the second composition is fed so that a salt concentration in the coagulation chamber matches that necessary to bring a magnitude of a zeta potential of the latex to be within a range of 1 to 0.

14. A masterbatch produced by a process comprising:

   continuously feeding a first composition comprising an elastomeric latex to a coagulation chamber; and
   continuously feeding a second composition comprising a particulate filler and a salt to the coagulation chamber at a velocity of at least 30.48 meter per second;

wherein the first composition and the second composition are mixed in the coagulation chamber to form the masterbatch.

15. The masterbatch of claim 14, wherein an amount of the salt in the second composition is fed so that a salt concentration in the coagulation chamber matches that necessary to bring a magnitude of a zeta potential of the latex to be within a range of 30 to 0.

FIG. 1

FIG. 2

EP 4 530 306 A1

**FIG. 3**

FIG. 4

FIG. 5

**FIG. 6**

**FIG. 7**

**Europäisches Patentamt**
**European Patent Office**
**Office européen des brevets**

# EUROPEAN SEARCH REPORT

Application Number

EP 24 20 2260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/306106 A1 (XIONG JINCHENG [US] ET AL) 26 October 2017 (2017-10-26) * paragraphs [0042], [0078] - [0080], [0082], [0105], [0120] - [0123], [0168], [0267], [0268], [0280], [0281], [0299]; claims 1-62; figures 1, 2; example 6; tables 6, 7 * | 1-15 | INV. C08J3/20 C08C1/15 C08J3/215 C08J3/22 C08K3/04 C08L7/02 C08L21/02 |
| X | US 2017/306107 A1 (XIONG JINCHENG [US] ET AL) 26 October 2017 (2017-10-26) * paragraphs [0067], [0085], [0086], [0092] - [0095], [0120], [0158] - [0160], [0165] - [0168], [0207], [0285] - [0319]; claims 1, 10, 24, 39, 40, 57, 58, 60, 64, 66; example 6; tables 6, 7 * | 1-15 | |
| X | US 2014/249249 A1 (DE GAUDEMARIS BENOIT [FR] ET AL) 4 September 2014 (2014-09-04) * paragraphs [0226] - [0231]; claims 1-18 * | 1,2,14, 15 | |
| X | JP 7 307584 B2 (TPR CO LTD) 12 July 2023 (2023-07-12) * paragraphs [0044], [0045]; claim 4; figure 1 * | 1,2,14, 15 | TECHNICAL FIELDS SEARCHED (IPC) C08J C08K C09J C08C C08L |
| A | EP 3 315 539 A1 (SUMITOMO RUBBER IND [JP]) 2 May 2018 (2018-05-02) * paragraphs [0040] - [0045], [0053] - [0056], [0061] - [0066], [0071] - [0079]; claims 1-6; examples 1, 2; table 1 * | 1-15 | |
| A | WO 97/36724 A2 (CABOT CORP [US]) 9 October 1997 (1997-10-09) * the whole document * | 1-15 | |

The present search report has been drawn up for all claims

| Place of search | Date of completion of the search | Examiner |
|---|---|---|
| Munich | 31 January 2025 | Fischer, Viktor |

EPO FORM 1503 03.82 (P04C01)

## ANNEX TO THE EUROPEAN SEARCH REPORT
## ON EUROPEAN PATENT APPLICATION NO.

EP 24 20 2260

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | Publication date |
|---|---|---|---|
| US 2017306106 A1 | 26-10-2017 | AU 2016291793 A1 | 01-02-2018 |
| | | BR 112018000833 A2 | 11-09-2018 |
| | | CA 2992259 A1 | 19-01-2017 |
| | | CL 2018000087 A1 | 11-05-2018 |
| | | CN 108026316 A | 11-05-2018 |
| | | DE 112016003169 T5 | 12-04-2018 |
| | | FR 3038899 A1 | 20-01-2017 |
| | | GB 2556569 A | 30-05-2018 |
| | | JP 6669851 B2 | 18-03-2020 |
| | | JP 2018524451 A | 30-08-2018 |
| | | MY 184652 A | 14-04-2021 |
| | | RU 2685310 C1 | 17-04-2019 |
| | | US 2017306106 A1 | 26-10-2017 |
| | | US 2018273701 A1 | 27-09-2018 |
| | | US 2019375899 A1 | 12-12-2019 |
| | | WO 2017011548 A1 | 19-01-2017 |
| US 2017306107 A1 | 26-10-2017 | AU 2016294421 A1 | 01-02-2018 |
| | | AU 2016294426 A1 | 01-02-2018 |
| | | AU 2016294430 A1 | 01-02-2018 |
| | | BR 112018000830 A2 | 04-09-2018 |
| | | BR 112018000831 A2 | 11-09-2018 |
| | | BR 112018000834 A2 | 11-09-2018 |
| | | CA 2992267 A1 | 19-01-2017 |
| | | CA 2992269 A1 | 19-01-2017 |
| | | CA 2992270 A1 | 19-01-2017 |
| | | CL 2018000088 A1 | 24-08-2018 |
| | | CL 2018000089 A1 | 11-05-2018 |
| | | CL 2018000090 A1 | 03-08-2018 |
| | | CN 108026314 A | 11-05-2018 |
| | | CN 108026315 A | 11-05-2018 |
| | | CN 108291049 A | 17-07-2018 |
| | | DE 112016003162 T5 | 19-04-2018 |
| | | DE 112016003168 T5 | 12-04-2018 |
| | | DE 112016003173 T5 | 29-03-2018 |
| | | FR 3038900 A1 | 20-01-2017 |
| | | FR 3038901 A1 | 20-01-2017 |
| | | FR 3038902 A1 | 20-01-2017 |
| | | GB 2556568 A | 30-05-2018 |
| | | GB 2556570 A | 30-05-2018 |
| | | GB 2556571 A | 30-05-2018 |
| | | JP 6717927 B2 | 08-07-2020 |
| | | JP 6744394 B2 | 19-08-2020 |
| | | JP 6756816 B2 | 16-09-2020 |
| | | JP 2018524450 A | 30-08-2018 |
| | | JP 2018525474 A | 06-09-2018 |

EPO FORM P0459

For more details about this annex : see Official Journal of the European Patent Office, No. 12/82

page 1 of 3

## ANNEX TO THE EUROPEAN SEARCH REPORT
## ON EUROPEAN PATENT APPLICATION NO.

EP 24 20 2260

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | | Publication date | Patent family member(s) | | Publication date |
|---|---|---|---|---|---|
| | | | JP | 2018528283 A | 27-09-2018 |
| | | | MY | 183718 A | 09-03-2021 |
| | | | MY | 186076 A | 18-06-2021 |
| | | | MY | 186627 A | 31-07-2021 |
| | | | RU | 2689750 C1 | 28-05-2019 |
| | | | RU | 2690260 C1 | 31-05-2019 |
| | | | RU | 2018105498 A | 15-08-2019 |
| | | | US | 2017306107 A1 | 26-10-2017 |
| | | | US | 2017306108 A1 | 26-10-2017 |
| | | | US | 2018201753 A1 | 19-07-2018 |
| | | | US | 2018251609 A1 | 06-09-2018 |
| | | | US | 2018273702 A1 | 27-09-2018 |
| | | | US | 2019375901 A1 | 12-12-2019 |
| | | | US | 2019375902 A1 | 12-12-2019 |
| | | | WO | 2017011561 A1 | 19-01-2017 |
| | | | WO | 2017011566 A1 | 19-01-2017 |
| | | | WO | 2017011570 A1 | 19-01-2017 |
| US 2014249249 | A1 | 04-09-2014 | CN | 103857536 A | 11-06-2014 |
| | | | EP | 2766198 A1 | 20-08-2014 |
| | | | FR | 2981079 A1 | 12-04-2013 |
| | | | RU | 2014118754 A | 20-11-2015 |
| | | | US | 2014249249 A1 | 04-09-2014 |
| | | | WO | 2013053736 A1 | 18-04-2013 |
| JP 7307584 | B2 | 12-07-2023 | JP | 7307584 B2 | 12-07-2023 |
| | | | JP | 2020180251 A | 05-11-2020 |
| EP 3315539 | A1 | 02-05-2018 | CN | 108003398 A | 08-05-2018 |
| | | | EP | 3315539 A1 | 02-05-2018 |
| | | | JP | 6878836 B2 | 02-06-2021 |
| | | | JP | 2018070812 A | 10-05-2018 |
| | | | US | 2018118898 A1 | 03-05-2018 |
| WO 9736724 | A2 | 09-10-1997 | AR | 006431 A1 | 25-08-1999 |
| | | | AR | 058464 A2 | 06-02-2008 |
| | | | AT | E411891 T1 | 15-11-2008 |
| | | | AU | 2600097 A | 22-10-1997 |
| | | | BR | 9708412 A | 24-10-2000 |
| | | | CA | 2250774 A1 | 09-10-1997 |
| | | | CN | 1616529 A | 18-05-2005 |
| | | | CN | 101186724 A | 28-05-2008 |
| | | | DK | 0892705 T3 | 02-02-2009 |
| | | | EP | 0892705 A2 | 27-01-1999 |
| | | | ES | 2317651 T3 | 16-04-2009 |
| | | | ID | 18783 A | 07-05-1997 |

EPO FORM P0459

For more details about this annex : see Official Journal of the European Patent Office, No. 12/82

page 2 of 3

## ANNEX TO THE EUROPEAN SEARCH REPORT
## ON EUROPEAN PATENT APPLICATION NO.

EP 24 20 2260

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | | Publication date |
|---|---|---|---|---|
| | | JP | 4234200 B2 | 04-03-2009 |
| | | JP | 4950154 B2 | 13-06-2012 |
| | | JP | 2000507892 A | 27-06-2000 |
| | | JP | 2009041026 A | 26-02-2009 |
| | | MY | 129158 A | 30-03-2007 |
| | | OA | 11095 A | 17-03-2003 |
| | | PT | 892705 E | 12-01-2009 |
| | | SG | 89248 A1 | 18-06-2002 |
| | | WO | 9736724 A2 | 09-10-1997 |

EPO FORM P0459

For more details about this annex : see Official Journal of the European Patent Office, No. 12/82

page 3 of 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6075084 A